## Europäisches Patentamt
## European Patent Office
## Office européen des brevets

(19)

(11) Veröffentlichungsnummer: **0 192 785**
**A1**

(12)
# EUROPÄISCHE PATENTANMELDUNG

(21) Anmeldenummer: **85100958.9**

(22) Anmeldetag: **31.01.85**

(51) Int. Cl.⁴: **B 23 P 15/22**
**B 21 C 37/15, F 16 L 59/12**

(43) Veröffentlichungstag der Anmeldung:
**03.09.86 Patentblatt 86/36**

(84) Benannte Vertragsstaaten:
**AT BE CH DE FR GB IT LI NL SE**

(71) Anmelder: **Zay, Bruno Dipl.-Ing.**
**Bellscheiderweg 38**
**D-4030 Ratingen 6(DE)**

(72) Erfinder: **Zay, Bruno Dipl.-Ing.**
**Bellscheiderweg 38**
**D-4030 Ratingen 6(DE)**

(54) **Verfahren zum Herstellen werkmässig vorgespannter und vorgedämmter Stahlmantelrohre.**

(57) Die Erfindung betrifft ein Verfahren zum Herstellen von werkmäßig vorgespannten und vorgedämmten Stahlmantel- rohren (Verbundrohre), insbesondere von Verbundrohren für Fernwärme, wobei Verbundrohre zu einem unendlich langen Rohrstrang aneinandergeschweißt in einen Graben oder Kanal verlegt werden.

Anschließend wird die Druckprobe durchgeführt und das Erdreich aufgebracht. Für das werkmäßig vorgespannte Rohr werden ebenfalls vorgefertigte Bögen, sowie T-Stücke verwendet.

Die Schrumpfung des vorher gedehnten vorgespannten Mediumstahlrohres 1 wird über die aufgeschweißten Man- schetten 2 und 3, Platten 4 und Scheiben 5 und 6 von dem Stahlmantelrohr 8 verhindert.

EP 0 192 785 A1

./...

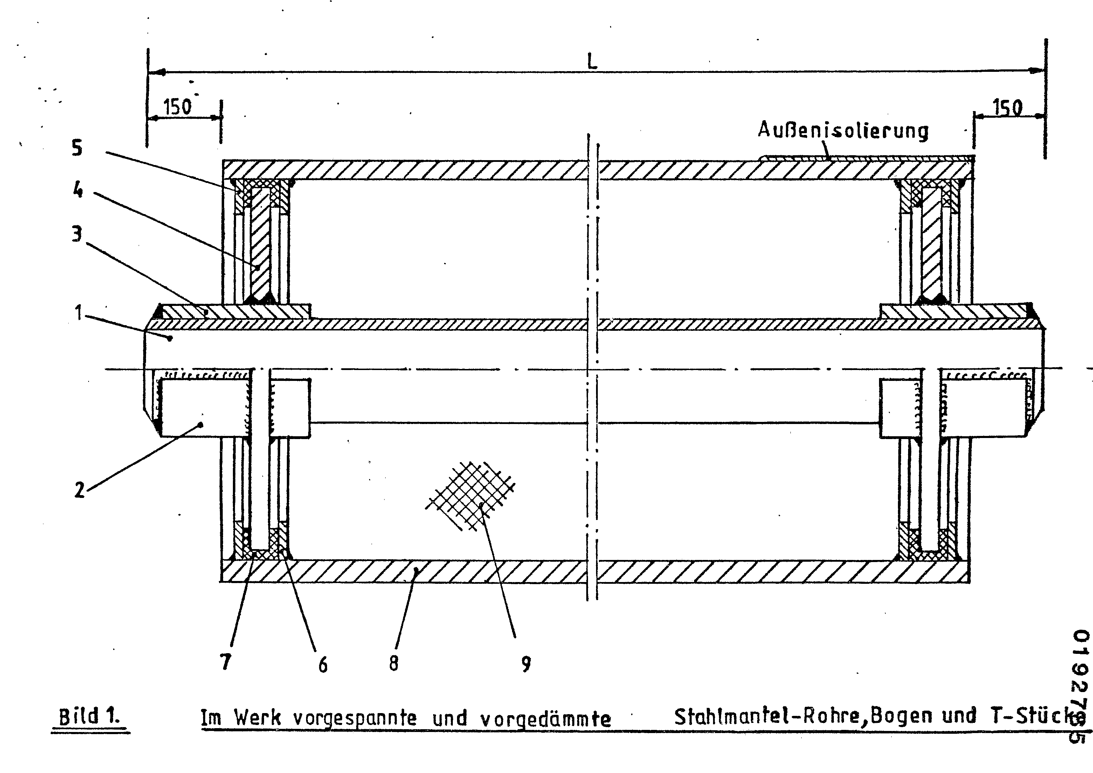

**Bild 1.**     Im Werk vorgespannte und vorgedämmte     Stahlmantel-Rohre, Bogen und T-Stücke

— 1 —

Verfahren zum Herstellen werkmäßig vorgespannter und vorgedämmter Stahlmantelrohre

Die Erfindung betrifft ein Verfahren zur Herstellung einer werkmäßigen Vorspannung an Stahlmantelrohren. Der heutige Stand der Technik ist folgender: Bei erdverlegten Fernwärmeleitungen wird nach dem Verfüllen des Rohrgrabens das Heizmedium durch die Rohre geleitet, so werden die durch die Wärme entstehenden Ausdehnungen erhebliche Spannungen in den Leitungen verursachen. Um dies zu verhindern, werden die Fernwärmeleitungen vorgespannt. Um die gewünschte Vorspannung zu erreichen, müssen die Leitungen vor dem Verfüllen des Grabens aufgeheizt werden bis die gewünschte Ausdehnung erreicht ist. Bei Abkühlung der überdeckten Rohre tritt ein Schrumpfvorgang auf, der durch die Reibung im Erdreich verhinert wird. (Siehe Moser+Wieland, Statische Probleme bei erdverlegten Fernheizleitungen, Mitteilungen Nr. 7 der Versicherungsanstalt für Wasserbau, Hydrologie und Glaziologie der ETH, Zürich.)

Um das Vorspannen von Fernwärmeleitungen durchzuführen kann dies durch folgende Aufheizverfahren geschehen.

1. Mit Heißwasser durch einen mobile Heizzentrale

2. Elektrisches Vorwärmverfahren.

3. Mit Vakuumdampftechnik.

4. Mechanisches Strecken (Zeitschrift Fernwärme International 1/1984 Seite 4).

Um eine Längenausdehnung bei verfülltem Graben zu erreichen, wird dies bereits von der Firma I.C. Moller durchgeführt und ist in Anlage 1 beigefügt. Nach diesen bereits bekannten Verfahren werden die Fernwärmeverbundsysteme auf der Baustelle vorgespannt, was mit großem Energieaufwand (Tiefbau) sowie finanziellem Aufwand und Verkehrsbehinderungen verbunden ist.

Aufgabe dieser Erfindung ist es, das Verfahren der eingangs genannten Art derart zu verbessern, daß bei geringem Energieaufwand die gewünschten Ausdehnungen bereits im Werk erreicht werden. Die vorgefertigten und vorgespannten Stahlrohre werden somit fix und fertig auf die Baustelle angeliefert und vermindern hierdurch erheblich die Montagekosten.

- 2 -

Unter Patentschutz und Gebrauchsmusterschutu soll gestellt werden, die in der Zeichnung Bild 1 aufgeführten "Im Werk vorgespannte Stahlmantel-Rohre, Bögen und T-Stücke" = Anspruch 1 - 2. Vorteile dieser Erfindung sind:

1. Wetterunabhängige Vorspannmöglichkeiten, also geringer Energieaufwand.

2. Kompensatoren, Dehnungsschenkel, Festpunkte sowie Dehnungspolster werden nicht mehr benötigt, dadurch werden die Rohrnetze preiswerter.

3. Die Spannungen in den Schweißnähten bei der Montagetemperatur $\sigma$ = 0, trotz 50 %iger Vorspannung.

4. Die Erdreibungskräfte, die für die herkömmliche Vorspannmethode so wichtig sind, verlieren ihre Bedeutung. Dahdurch kann man die Leitungen flachverlegen, was mit großen Einsparungen bei den Tiefbauarbeiten verbunden ist.

5. Geringe Verkehrsbehinderung - Nach Verlegen und Druckprbe werden die Gräben sofort verfüllt, was besonders im innerstädtischen Netzausbau von großer Bedeutung ist.

Diese Aufgabe wird erfindergemäß nach Bild 1 auf folgende Weise gelöst: das Mediumstahlrohr (1) wird in ein PE-kunststoffisoliertes Stahlrohr (8) gesteckt, danach wird das Mediumstahlrohr (1) durch Aufheizen oder mechanischer Streckung auf die gewünschte Ausdehnung gebracht. Nach Erreichen der gewünschten Ausdehnung wird das Mediumstahlrohr (1) in einer Spannvorrichtung festgehalten.

Mit der Abkühlung der Leitung treten Zugkräfte im Mediumstahlrohr (1) auf, die von der Spannvorrichtung abgefangen werden. Jetzt werden die Innenscheiben (6) in das Stahlmantelrohr (8) eingeschweißt. Danach werden die Manschetten (2) und (3) mit der aufgeschweißten Platte (4) auf das Mediumstahlrohr (1) aufgeschweißt. Vorher werden noch die thermischen Isolierringe (7) auf die Scheiben (4) montiert. Als letztes werden sie Innenscheiben (5) in das Stahlmantelrohr (8) eingeschweißt.

Nach dem Abkoppeln von der Spannvorrichtung werden die Zugkräfte aus dem Mediumstahlrohr (1) durch die Platten (4) und Manschetten (2) und (3) von dem Stahlmantelrohr (8) übernommen. Der Zwischen-

- 3 -

raum (9) wird mit Isoliermaterial gefüllt.- bis 130°C Betriebstemperatur mit PUR-Schaum und ab 130°C mit anderem hitzebeständigem Isoliermaterial. In der gleichen Art werden auch die Bögen
und T-Stücke ab Werk vorgespannt.

Die ab Werk vorgespannten Verbundrohre werden jetzt auf der Baustelle in Gräben oder Kanälen zu eimen Rohrstrang aneinander
geschweißt.

Wenn die Verbindrohre ab Werk 50 % vorgespannt sind, kann man die
Rohre in einen unendlich langen Rohrstrang aneinanderschweißen,
ohne Kompensatoren oder Dehnungsschenkel zu benötigen. Durch
die 50 %ige Vorspannung werden die Spannungen im Rohrstrang halbiert. Beim Abkühlen haben wir im Mediumstahlrohr (1) Zugspannungen und im Stahlmantelrohr (8) Druckspannungen. Beim Erreichen
der Betriebstemperatur ändert sich das in folgender Weise: in dem
Mediumstahlrohr treten Druckspannungen und im Stahlmantelrohr
Zugspannungen auf.

Spannungsbild im Mediumstahlrohr (1)

Die im Werk vorgespannten Stahlmantelrohre, die in einem Rohrstrang
verlegt sind, verhalten sich in ihrer Gesamtheit wie ein Festpunkt.

Patentansprüche

1. Verfahren zur Herstellung von werkmäßig vorgespannten und vorgedämmten Stahlmantelrohren, bei denen im Mediumrohr ein Dehnungszustand herbeigeführt wird, der dem einer mittleren Betriebstemperatur entspricht.

2. Verfahren nach Anspruch 1 gekennzeichnet dadurch, daß die Schrumpfung des vorher gedehnten Mediumstahlrohres 1, über die aufgeschweißten Manschetten 2 und 3, Platten 4 und Scheiben 5 und 6 von dem Stahlmantelrohr 8 verhindert wird.

3. Verfahren nach Anspruch 1 bis 2, gekennzeichnet dadurch, daß die Vorspannung vor oder nach dem Aufbringen des Erdreiches ersetzt wird.

4. Verfahren nach Anspruch 1 bis 2, dadurch gekennzeichnet, daß die Schweißnähte im Montagezustand die Spannung $\sigma = 0$ haben.

5. Verfahren nach Anspruch 1 bis 2, dadurch gekennzeichnet, daß die langen offenen Baustellen, die bei herkömmlichen Vorspannmethoden notwendig sind, auf ein Minimum reduziert werden.

6. Verfahren nach Anspruch 1 bis 2, dadurch gekennzeichnet, daß die für die Vorspannung so wichtigen Erdreibungskräfte ihre Bedeutung verloren haben, was für die Flachverlegung von großem Vorteil ist.

( 1 <u>Patentansprüche</u>

1. Verfahren zur Herstellung von werkmäßig vorgespannten und vorgedämmtän Stahlmantelrohren -bogen und T-Stücken, bestehend aus einen Innenrohr aus Stahl, das nach einer Streckung entsprechend einer Wärmedehnung bei mittlerer Betriebstemperatur mit einen Außenrohr aus Stahl derart verbunden ist, daß beide Rohre gemeinsam Zug und Druckspannungen aufnehmen, dadurch gekennzeichnet , daß das Innenrohr von den Außenrohr zumindest in Bereich der Kraftsübertragenden Verbindung thermisch isoliert ist.

2. Verfahren nach Anspruch 1 gekennzeichnet dadurch, daß die Schrumpfung des vorher gedehnten Mediumstahlrohres 1, über die aufgeschweißten Manschetten 2 und 3, Platten 4 und Scheiben 5 und 6 von dem Stahlmantelrohr 8 verhindert wird.

*thermische Isolierung 7*

3. Verfahren nach Anspruch 1 bis 2, gekennzeichnet dadurch, daß die Vorspannung vor oder nach dem Aufbringen des Erdreiches ersetzt wird.

4. Verfahren nach Anspruch 1 bis 2, dadurch gekennzeichnet, daß die Schweißnähte im Montagezustand die Spannung $\sigma = 0$ haben.

5. Verfahren nach Anspruch 1 bis 2, dadurch gekennzeichnet, daß die langen offenen Baustellen, die bei herkömmlichen Vorspannmethoden notwendig sind, auf ein Minimum reduziert werden.

6. Verfahren nach Anspruch 1 bis 2 dadurch gekennzeichnet, daß bei Verlegen von werkmäßig vorgespannten und vorgedämmten Stahlmantelrohren -bogen und T-Stücken in Kunststoffmantelrohr-Systemen der Risikofaktor Dehnungspolster ausgeschaltet wird.

7. Verfahren nach Anspruch 1 bis 2, dadurch gekannzeichnet, daß die für die Vorspannung so wichtigen Erdreibungskräte bei der Verwendung von Stahlmantelrohren-bogen und T-Stücken in Kuststoffmantelrohr-Systemen an Bedeutung verlieren, was für die Flachverlegung von großem Vorteil ist.

**Bild 1.** Im Werk vorgespannte und vorgedämmte Stahlmantel-Rohre, Bogen und T-Stücke

Außenisolierung

L

150    150

5  4  3  1  2  7  6  8  9

**Europäisches Patentamt**

**EUROPÄISCHER RECHERCHENBERICHT**

**0192785**
Nummer der Anmeldung

EP 85 10 0958

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 865 145 (FOUNDATION GRYOGENIC JOINT VENTURE) <br> * Spalte 1, Zeile 66 - Spalte 2, Zeile 20; Anspruch 1; Abbildung 1 * | 1-6 | B 23 P 15/22 <br> B 21 C 37/15 <br> F 16 L 59/12 |
| X | EP-A-0 104 789 (THE BABCOCK & WILCOX COMP.) <br> * Seite 1, Zeile 25 - Seite 2, Zeile 10; Ansprüche 1,2; Abbildung 1 * | 1 | |
| X | US-A-3 654 691 (WILLHITE et al.) <br> * Anspruch 1; Abbildung 1 * | 1 | |
| X | DE-B-1 258 215 (WINTER & CO.) <br> * Anspruch 1; Abbildung 1 * | 1 | RECHERCHIERTE SACHGEBIETE (Int. Cl.4) |
| A | FR-A- 983 068 (ANTONIOU) | | B 21 C 37/00 <br> B 23 P 15/00 <br> F 16 L 59/00 <br> F 16 L 9/00 |

Der vorliegende Recherchenbericht wurde für alle Patentansprüche erstellt.

| Recherchenort <br> DEN HAAG | Abschlußdatum der Recherche <br> 22-10-1985 | Prüfer <br> BELIBEL C. |
|---|---|---|